# EUROPÄISCHE PATENTSCHRIFT

(11) **EP 1 261 565 B1**
(45) Veröffentlichungstag und Bekanntmachung des Hinweises auf die Patenterteilung: **10.05.2006**
(21) Anmeldenummer: 01919368.9
(22) Anmeldetag: 02.03.2001
(51) Int. Cl.: C04B 35/043

(54) **VERSATZ ZUR HERSTELLUNG EINES FEUERFESTEN KERAMISCHEN FORMKÖRPERS, DARAUS GEBILDETER FORMKÖRPER UND DESSEN VERWENDUNG**
BATCH COMPOSITION FOR PRODUCING A REFRACTORY CERAMIC SHAPED BODY, SHAPED BODY PRODUCED THEREFROM AND THE USE THEREOF
MELANGE POUR FABRIQUER UN CORPS MOULE EN CERAMIQUE REFRACTAIRE, LE CORPS MOULE AINSI FABRIQUE ET SON UTILISATION

(30) Priorität: 06.03.2000 DE 10010918
(43) Veröffentlichungstag der Anmeldung: 04.12.2002
(73) Patentinhaber: Veitsch-Radex GmbH & Co, 1100 Wien (AT)
(72) Erfinder: BUCHEBNER, Gerald, A-8700 Leoben (AT); HARMUTH, Harald, A-8700 Leoben (AT); MOLINARI, Thomas, A-8700 Leoben (AT)
(74) Vertreter: Becker, Thomas
(86) Internationale Anmeldenummer: PCT/EP2001/002362
(87) Internationale Veröffentlichungsnummer: WO 2001/066489

(56) Entgegenhaltungen:
- GB-A- 1 098 162
- US-A- 3 985 842
- DATABASE CHEMABS [Online] CHEMICAL ABSTRACTS SERVICE, COLUMBUS, OHIO, US; GHEORGHE-PREDESCU, MIHAELA ET AL: "Manufacture of magnesia refractories" retrieved from STN Database accession no. 109:97783 CA XP002170151 & RO 92 808 B (INSTITUTUL DE CERCETARI METALURGICE , ROM.) 30. Oktober 1987 (1987-10-30)

## Beschreibung

Die Erfindung betrifft einen Versatz zur Herstellung eines feuerfesten keramischen Formkörpers, einen daraus gebildeten Formkörper und dessen Verwendung.

Die GB-A-1098162 offenbart feuerfeste Produkte mit guter Heißfestigkeit auf Basis MgO/Chromoxid und einer CaOhaltigen Komponente.

Die US-A-3985842 beschreibt MgO-Schmelzprodukte mit 10-40% Zusatzstoffen wie CaCO₃.

In STN Database accession no. 109:97783 CA XP002170151 & RO 92 808 B (INSTITUTUL DE CERCETARI METALURGICE, ROM.) 30.Oktober 1987 (1987-10-30) werden Reparaturmassen unter Verwendung von MgO und gelöschtem Kalk beschrieben.

Auf der Basis von Magnesit sind gebrannte feuerfeste Steine bekannt, die unter Einbeziehung eines Sinterprozesses des Magnesits zur Erzielung eines im wesentlichen volumenstabilen und temperaturbeständigen MgO-Trägers als Magnesia- und Magnesia-Chromit Erzeugnisse bezeichnet werden.

Derartige, insbesondere rein magnesitische Sorten zeigen eine gute Verschleißbeständigkeit, häufig jedoch ein unbefriedigendes Infiltrationsverhalten gegenüber metallurgischen Schlacken, wie sie zum Beispiel bei Verfahren zur Herstellung von Edelstahl typisch sind. Solche Verfahren sind als AOD (= argon-oxygen-decarb-Verfahren) oder VOD (= vacuum-oxygen-decarburization-Verfahren) bekannt.

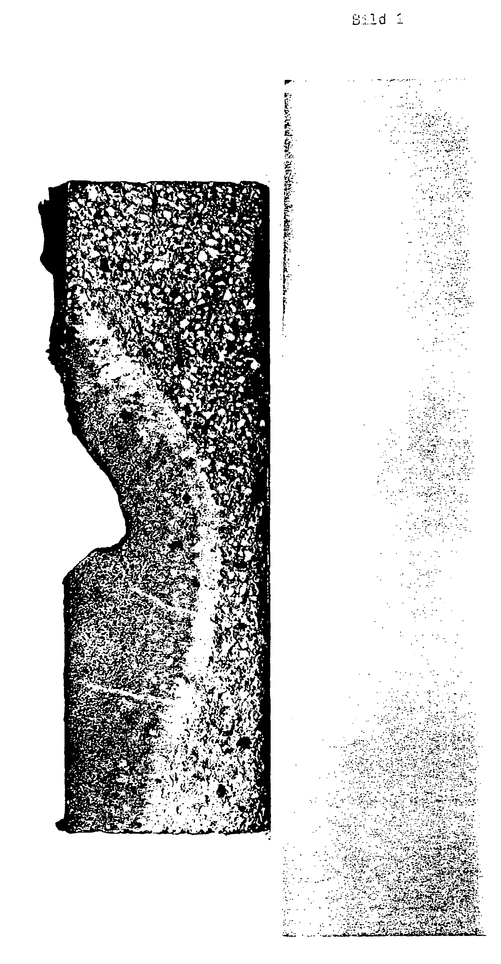

Bild 1 zeigt einen gebrannten, rein magnesitischen Stein nach Einwirkung einer AOD-Konverterschlacke bei 1.700 bis 1.750°C.

Zu erkennen ist eine relativ kleine Verschleißzone (hier: 7,9 cm²), jedoch eine erhebliche Infiltration der Schlacke in den Stein (über eine Tiefe bis zu 35 mm).

Neben diesen rein magnesitischen Sorten sind gebrannte (auch kohlenstoffgebundene) Steine bekannt, die zumindest einen erheblichen Anteil an Dolomit enthalten. Je nachdem, ob sie ausschließlich aus Dolomit oder überwiegend aus Dolomit (neben Magnesiazusätzen) bestehen, werden sie als Dolomit- oder Magdol-Steine bezeichnet.

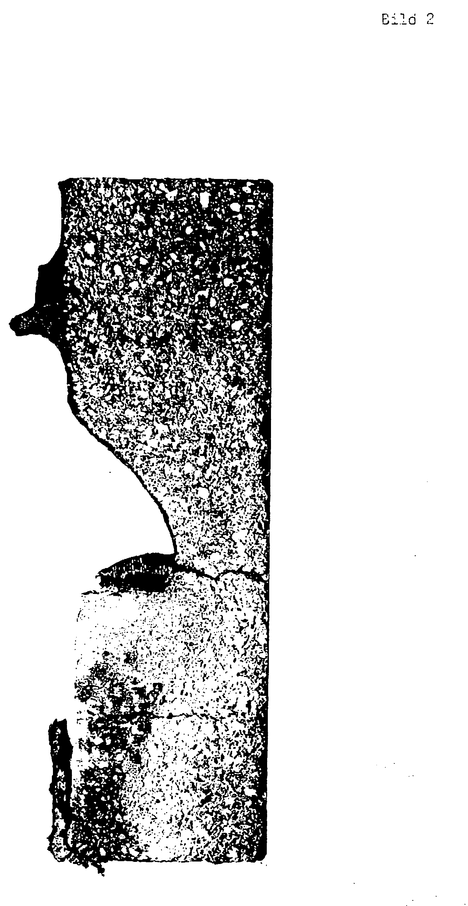

Bild 2 zeigt einen solchen gebrannten Magdol-Stein aus 20 % Magnesiasinter und 80 % Schmelzdolomit nach einem Schlackentest, analog wie zu Bild 1 beschrieben.

Der Verschleiß dieses Magdol-Steins (ursprünglich formgleich zu vorgenanntem Magnesiastein) ist deutlich gegenüber dem reinen Magnesiastein erhöht (hier: 21,9 cm²); der Magdol-Stein weist jedoch eine charakteristisch verringerte Infiltrationszone von lediglich etwas mehr als 1,0 mm auf.

Aus den Bildern 1, 2 ist folgendes abzuleiten:

Bei dem rein magnesitischen Stein (Bild 1) kommt es zu einer erheblichen Schlackeninfiltration. MgO zeigt zwar grundsätzlich im Vergleich zu Dolomit eine bessere Korrosionsbeständigkeit. Der tief infiltrierte Steinbereich führt jedoch im weiteren zu einem erheblichen Steinverschleiß. Bei lang andauernder Temperatureinwirkung wird die Bindung zwischen den MgO-Körnern im infiltrierten Bereich aufgelöst. Bei Temperaturwechseln kann sich die infiltrierte von der nicht infiltrierten Zone ablösen.

Bei dolomitischen Steinen (Bild 2) ist die Infiltration zwar deutlich geringer, der Verschleiß jedoch erheblich höher (im Vergleich zu MgO-Steinen). Ursache ist eine verstärkte Korrosion und Auflösung des Steingefüges. Die CaO-Anteile des Dolomits haben sich in erheblichem Maß aufgelöst.

Der Erfindung liegt die Aufgabe zugrunde, einen Weg zur Herstellung eines feuerfesten keramischen Formkörpers aufzuzeigen, bei dem die guten Verschleiß- und Korrosionseigenschaften rein magnesitischer Formkörper mit der guten Infiltrationsbeständigkeit dolomitischer Formkörper verknüpft sind.

Der Erfindung liegt die Erkenntnis zugrunde, daß dieses Ziel durch einen Versatz erreicht wird, dessen Zusammensetzung hinsichtlich der rein oxidischen Grundkomponenten sich zwar weitestgehend an der bekannter Steinsorten orientiert, dessen Rohstoffauswahl jedoch insoweit verändert ist, als daß CaO als eigenständige Komponente einer magnesitischen Hauptkomponente zugegeben wird. Die CaO-Komponente sollte einen Reinheitsgrad von > 96 Gew.-% CaO aufweisen.

Auf diese Weise kann CaO in einer definierten Kornfraktion "dosiert" zugegeben werden, und zwar unter Beibehaltung eines zusammenhängenden, korrosionsbeständigen MgO-Gerüsts in der Matrix bei der Anwendung.

"Dosiert" heißt hier: insbesondere in Hinblick auf die genannten Anwendungsfälle, insbesondere das Verhalten des Steins gegenüber metallurgischen Schlacken, wie nachstehend noch ausgeführt wird. Auf diese Weise wirkt sich eine vorzeitige Auflösung der CaO-reichen Komponente durch Schlackenkomponenten wie SiO₂, CaF₂, FeO oder Al₂O₃ nicht, wie bei Dolomit beziehungsweise dolomitischen Steinen, zerstörend auf das Gefüge aus, weil eine tragende MgO-Matrix mit guter Korrosionsbeständigkeit bestehen bleibt.

Danach betrifft die Erfindung in ihrer allgemeinsten Ausführungsform einen Versatz zur Herstellung eines feuerfesten keramischen Formkörpers, mit folgenden eigenständigen Komponenten:
a) 68 bis 97 Gew.-%. Schmelzmagnesit, Sintermagnesit oder Mischungen daraus mit einem MgO-Gehalt > 93 Gew.-% und einer Korngröße < 8 mm,
b) 3 bis 20 Gew.-% CaO in einer Kornfraktion < 1 mm,
c) 0 bis 25 Gew.-% mindestens einer weiteren feuerfesten oder nach einem Brand feuerfesten Komponente in einer Korngröße < 3 mm.

Im weiteren betrifft die Erfindung einen auf Basis dieses Versatzes und eines Bindemittels hergestellten ungebrannten oder gebrannten Formkörper. Das Bindemittel kann zum Beispiel ein C-haltiges temporäres Bindemittel wie Paraffin sein.

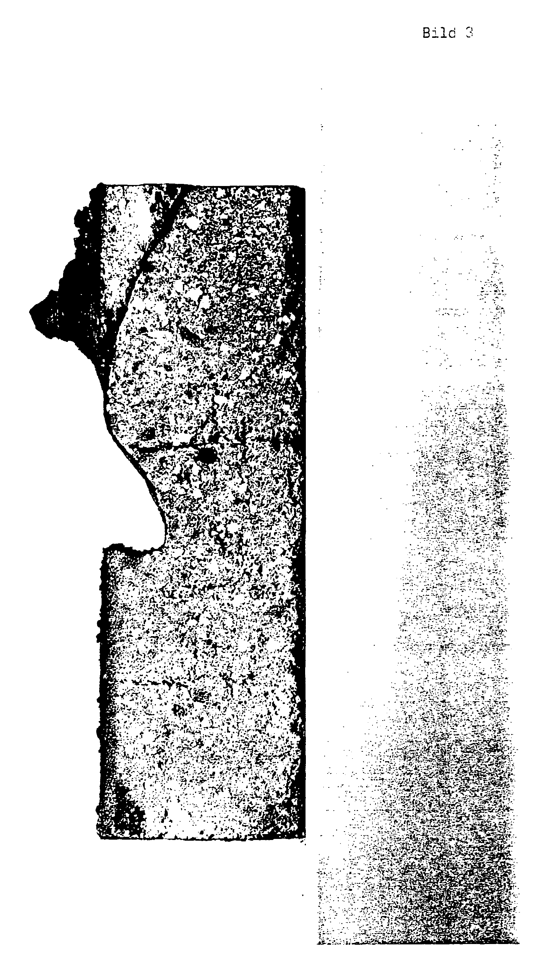

Bild 3 zeigt einen so hergestellten Stein (ursprünglich wieder formgleich zu den Steinen nach Bild 1 und Bild 2) nach einem analogen Schlackentest, wie er bei den Steinen gemäß Bild 1 und Bild 2 durchgeführt wurde.

Es ist zu erkennen, daß der Verschleiß (hier: 7,8 cm²) dem des reinen Magnesiasteins (Bild 1) entspricht und die Infiltrationszone (hier: 2 mm) ähnlich gering ist wie bei dem dolomitischen Stein nach Bild 2.

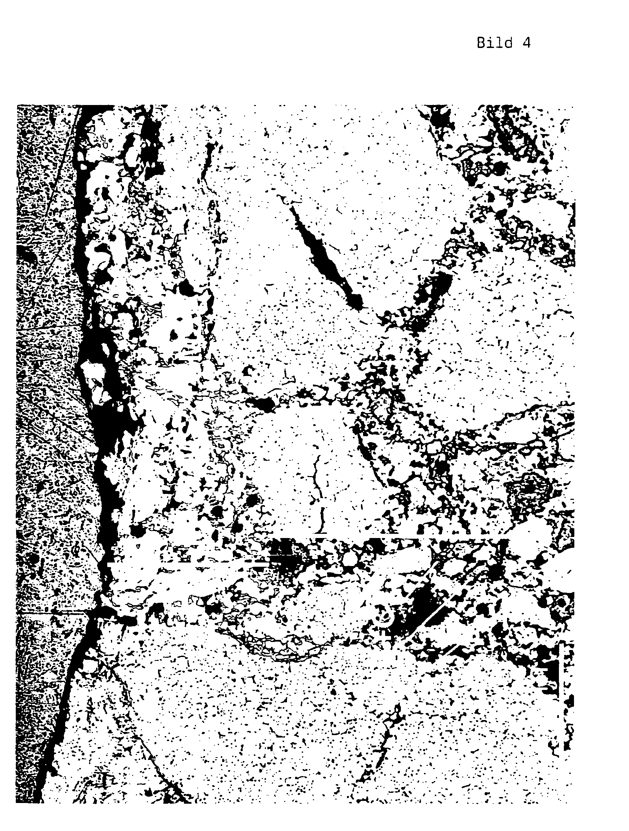

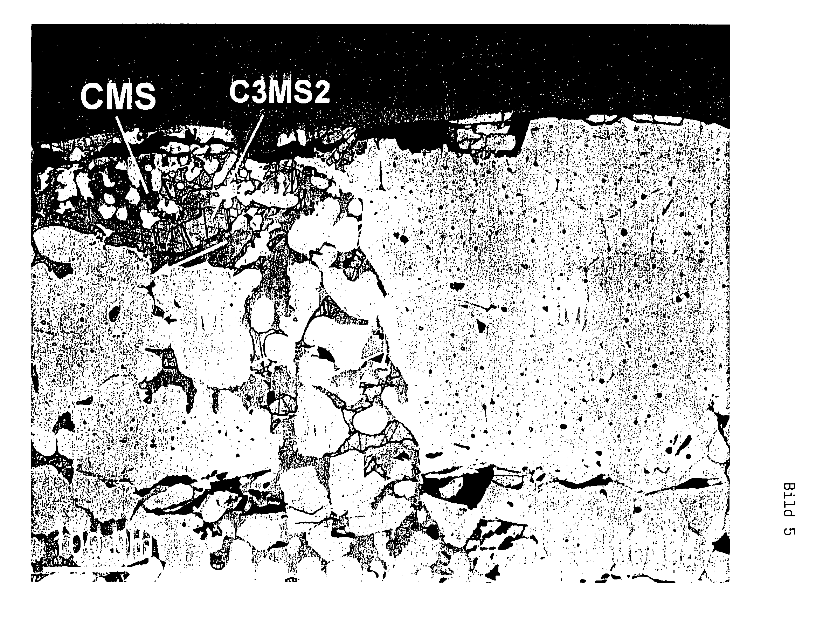

Den Wirkungsmechanismus (das Verhalten des Steins gegenüber metallurgischen Schlacken) zeigen ergänzend die Bilder 4 und 5.

Die Bilder 4 und 5 sind geätzte Anschliffe des erfindungsgemäßen Steins nach dem Schlackentest.

Die mit (M) bezeichneten und in den Bildern hell erscheinenden Anteile charakterisieren Magnesia (MgO). Die zwischen den MgO-Matrixanteilen ursprünglich vorhandenen Poren sind an der Feuerseite (oben in den Bildern) von einem Reaktionsprodukt aus steineigenen Phasen und Schlacke verfüllt. "Feuerseite" bedeutet die der Metallschmelze/Schlacke zugewandte Seite.

Im Anschluß an eine Reaktionszone (ca. 0,5 mm ab Feuerseite), die als Reaktionsprodukte vorwiegend Monticellit (CMS) und Merwinit (C3MS2) enthält, hat die Schlacke bereits so viel CaO (C) vom Stein aufgenommen, daß hochschmelzendes Dicalciumsilikat (C2S) gebildet wurde, so daß die Schlacke angesteift ist und nicht mehr (weiter) infiltrieren kann. Die maximale Infiltrationstiefe in Bild 4 beträgt 1,4 mm.

Bild 5 zeigt einen Ausschnitt aus der 0,5 mm breiten Reaktionszone an der unmittelbaren Feuerseite. Es ist zu erkennen, daß trotz Reaktion mit der aggressiven, sauren Schlacke ein stabiles MgO-Gerüst bestehen geblieben ist. Die Pfeile in Bild 5 zeigen intakte MgO-MgO-Bindungen an der Feuerseite. Dieser Effekt kann mit steigendem MgO-Gehalt optimiert werden. Derselbe schlackenansteifende Effekt wurde auch bei basischen Schlacken beobachtet, die durch Al₂O₃- oder CaF₂-Gehalte gleichermaßen aggressiv wirken.

Das Ziel der schlackenansteifenden Wirkung durch Zusatz von CaO unter Beibehaltung der guten Korrosionsbeständigkeit eines Magnesiasteines kann im Zusammenhang mit Schlacken der genannten Art (wie z.B. aus AOD-Konvertern oder VOD-Pfannen) bei gattungsgemäßen Formkörpern auch mit einem CaO-Gehalt zwischen 5 und 10 Gew.-% erreicht werden. Zuviel reines CaO (> 20 Gew.-%) im Steingefüge wirkt der Ausbildung eines zusammenhängenden, korrosionsbeständigen MgO-Gerüsts beim Steinbrand entgegen und erhöht die Korrosion.

In Dolomitsteinen kommt es ähnlich wie oben beschrieben ebenfalls zur Reaktion der Schlacke mit steineigenen Phasen und in weiterer Folge zum Ansteifen der Schlacke. Bei Dolomitsteinen führt diese Reaktion jedoch aufgrund des wesentlich höheren CaO-Gehaltes und einer homogeneren CaO-Verteilung gleichzeitig zu einer Auflösung der Steinbindung und damit zu einem beschleunigten Verschleiß (Bild 2).

Weitere physikalische Kenndaten des erfindungsgemäß ausgebildeten Steins (Bilder 3 bis 5) im Vergleich zu den Steinen gemäß Bild 1 und Bild 2 sind in nachstehender Tabelle zusammengefaßt:

| | erfindungsgemäßer Stein (Bilder 3-5) | Magnesiastein (Bild 1) | Dolomitstein (Bild 2) |
|---|---|---|---|
| Brenntemperatur (°C) | 1.650 | 1.720 | 1.550 |
| Rohdichte (g/cm³) | 3,01 | 3,01 | 2,94 |
| offene Porosität (Vol.-%) | 14,3 | 15,0 | 16,0 |
| Kaltdruckfestigkeit (N/mm²) | 76 | 49 | 53 |

Die Tabelle zeigt, daß der erfindungsgemäße Stein günstige Porositätswerte und eine hohe Kaltdruckfestigkeit besitzt.

Dabei beziehen sich sämtliche vorstehend angegebenen Daten zum erfindungsgemäßen Stein auf einen solchen aus 94 Gew.-% Magnesiasinter der Kornfraktion < 5 mm und 6 Gew.-% CaO in einer Kornfraktion < 200 µm.

Der MgO-Gehalt der magnesitischen Versatz-Komponente liegt nach einer Ausführungsform bei mindestens 97 Gew.-% und die Korngröße nach einer Alternative unterhalb 5 mm.

Die CaO-Komponente soll möglichst rein sein und der Reinheitsgrad beträgt beispielsweise > 96 Gew.-%. Es ist aber auch denkbar, eine CaO-Komponente mit kleinerem CaO-Gehalt einzusetzen, zum Beispiel > 70 Gew.%, wobei der Reinheitsgrad jedoch in jedem Fall über 55 Gew.-% betragen soll. Entsprechend dem geforderten CaO-Gehalt ist die Einwaage dieser Komponente bei der Aufbereitung des Versatzes dann gegebenenfalls zu erhöhen beziehungsweise der Anteil der MgO-Komponente herabzusetzen. Nach einer Ausführungsform wird die CaO-Komponente im Versatz in einer Korngröße < 200 µm eingesetzt.

Ausgehend von den vorgenannten Effekten umfaßt die Erfindung auch die Verwendung eines vorgenannten Formkörpers zur Auskleidung eines metallurgischen Schmelzgefäßes insbesondere in dessen Schlackenzone, bei der der Gehalt der Komponenten MgO und CaO so eingestellt ist, daß das CaO mit einem Schlackeninfiltrat hochschmelzende Phasen wie C₂S in einer Menge bildet, die offene Poren des Formkörpers auf seiner Feuerseite oberflächennah (bis zu etwa 2 mm) verfüllt.

Der damit verbundene ansteifende Effekt verhindert ein tieferes Eindringen des Infiltrats in den Formkörper.

Die Erfindung bietet ferner einen Versatz der vorstehend beschriebenen Art an, der neben dem Basisversatz aus MgObeziehungsweise CaO-Grundkomponenten a) und b) mindestens eine weitere feuerfeste oder nach dem Brand feuerfeste Komponente in einer Korngröße < 3 mm (nach einer Ausführungsform: < 1 mm) umfaßt.

Diese zusätzliche feuerfeste Komponente kann beispielsweise aus mindestens einem der nachstehend genannten feuerfesten Oxide beziehungsweise oxidischen Schmelzmaterialien bestehen: SrO, TiO₂, ZrO₂, SiO₂, CaO-MgO, SrO-CaO, SrO-ZrO₂.

Die oben genannte C₂S-Bildung kann insbesondere bei hochbasischen Schlacken, beispielsweise des Systems CaO-SiO₂₋CaF₂ beim Abkühlen der entsprechenden Steinausmauerung unter 500° C zu einer Gefügezerstörung (sogenannter C₂S-Zerfall) aufgrund eines Wechsels des Dicalciumsilikats von der Beta- zur Gamma-Modifikation führen. Um dem entgegenzuwirken, eignen sich vor allem Versätze der vorgenannten Art.

Unter einer nach dem Brand feuerfesten Komponente wird eine Komponente verstanden, die als Versatzkomponente (als solche) keine feuerfesten Eigenschaften besitzt, jedoch während des Brandes eines aus dem Versatz hergestellten Produktes, beispielsweise eines Steins, sich zu einer feuerfesten Komponente umwandelt, das heißt zu einer Komponente mit einem Schmelzpunkt von typischerweise über 1.400°C. Zum Beispiel entsteht aus Strontiumcarbonat durch Zersetzung bei ca. 1.200°C Strontiumoxid als Feuerfestkomponente mit einem Schmelzpunkt von ca. 2.400°C. Wie sich aus der vorstehenden Tabelle ergibt, liegt die Brenntemperatur für derartige Produkte üblicherweise über 1.600° C.

Konkret sind in diesem Zusammenhang beispielhaft nicht oxidische Verbindungen, insbesondere Strontiumverbindungen, geeignet, beispielsweise Strontiumcarbonat, Strontiumsulfat, Strontiumhydroxid, Strontiumnitrat, Strontiumchlorid oder Strontiumborid, die einzeln oder in Mischung eingesetzt werden können. Bei dem beschriebenen Brand wandeln sich vorgenannte nicht oxidische Strontiumverbindungen in hochreaktives Strontiumoxid (SrO) um. Durch die hohe Reaktivität kann dieses Strontiumoxid "mobil" werden und entlang des Temperaturgefälles beispielsweise beim Einsatz des Steins von der Feuerseite aus abwandern (ausseigern). Es steht damit nicht mehr als stabilisierendes Fremdion an der unmittelbaren Feuerseite zur Verfügung.

Aus diesem Grunde ist es von Vorteil, bereits im Versatz eine Strontiumkomponente zuzusetzen, wie ein SrO-haltiges Schmelzmaterial (welches zum Beispiel im Elektrolichtbogenofen aus SrCO₃ synthetisch durch einen Schmelzprozeß hergestellt wurde), das sich im Unterschied zu einem beim Steinbrand in situ gebildeten Strontiumoxid durch eine besonders hohe Kristallgröße im Bereich beispielsweise 40 bis 300 µm auszeichnet. Neben dem bereits erwähnten SrO-CaO-Schmelzmaterial eignet sich vor allem ein SrO-ZrO₂₋Schmelzmaterial (beispielsweise mit im wesentlichen gleichen Anteilen an Strontium- beziehungsweise Zirkoniumoxid), bei dem die neu gebildeten Phasen eine gute Hydratationsbeständigkeit zeigen.

Die Zugabe der genannten Strontiumverbindung(en) sollte so gewählt werden, daß der Gehalt an Strontiumoxid im gebrannten Produkt mindestens 2 Gew.-%, bezogen auf den Stein, beträgt.

Ähnliche Steineigenschaften hinsichtlich Vermeidung des C₂S-Zerfalls und unter Beibehaltung der guten Korrosionsbeständigkeit, werden unter Zugabe anderer feuerfester Oxidkomponenten zum Basisversatz erreicht. Auch hier führt beispielsweise die Zugabe eines MgO-CaO-Schmelzmaterials aufgrund der hohen Kristallgröße (wiederum ca. 40 bis 300 µm, im Vergleich zu ca. 10 bis 15 µm Kristallgröße natürlich vorkommender dolomitischer Rohstoffe) und des MgO-Gehalts zur Beibehaltung eines zusammenhängenden, korrosionsbeständigen MgO-Gerüstes im Stein.

Das Schmelzmaterial kann unterschiedliche Anteile an MgO und CaO enthalten. Eine Ausführungsform sieht vor, ein MgO-CaO-Schmelzmaterial einzusetzen, welches gegenüber natürlichen dolomitischen Rohstoffen einen höheren MgO-Gehalt aufweist, der beispielsweise 60 Gew.-% beträgt.

Auch bei diesen, vorstehend beschriebenen erweiterten Versätzen bleiben die eingangs beschriebenen Effekte des CaO unverändert erhalten, um einen hoch reaktiven Reaktionspartner für infiltrierende Schlacke anzubieten, um so die Infiltration der Schlacke im feuerseitigen Bereich zu reduzieren beziehungsweise anzuhalten und damit einer Zerstörung des Steins vorzubeugen.

Die Menge der feuerfesten oder nach einem Brand feuerfesten Zusatzkomponente liegt nach einer Ausführungsform im Bereich 15 bis 25 Gew.-%, bezogen auf den Gesamtversatz. Der CaO-Gehalt gemäß Komponente b) wird entsprechend auf 5 bis 11 Gew.-% beschränkt. Der Gehalt an Schmelzmagnesit, Sintermagnesit oder Mischungen daraus gemäß Komponente a) beträgt dann beispielhaft 68 bis 80 Gew.-% (alle Angaben jeweils auf den Gesamtversatz bezogen).

Es ist selbstverständlich, daß sich sämtliche Versatzkomponenten jeweils auf 100 Gew.-% addieren müssen. Dies schließt nicht die Zugabe kleinerer Mengen weiterer Versatzkomponenten aus, unter entsprechender Reduzierung der übrigen Versatzkomponenten.

So kann das Prinzip der infiltrationshemmenden Wirkung durch (getrennten) Zusatz von CaO auch auf einen pech- oder kunstharzgebundenen (ungebrannten) Formkörper auf Basis MgO angewendet werden. In diesem Fall weist die Gesamtmischung (der Versatz) beispielsweise 2 bis 20 Gew.-% Kohlenstoff, bezogen auf die Gesamtmischung, auf.

## Patentansprüche

1. Versatz zur Herstellung eines feuerfesten keramischen Formkörpers, mit folgenden eigenständigen Komponenten:
a) 68 bis 97 Gew.-% Schmelzmagnesit, Sintermagnesit oder Mischungen daraus mit einem MgO-Gehalt > 93 Gew.-% und einer Korngröße < 8 mm,
b) 3 bis 20 Gew.-% CaO in einer Kornfraktion < 1 mm,
c) 0 bis 25 Gew.-% mindestens einer weiteren feuerfesten oder nach einem Brand feuerfesten Komponente in einer Korngröße < 3 mm.

2. Versatz nach Anspruch 1, bei dem die Korngröße der Komponente a) < 5 mm beträgt.

3. Versatz nach Anspruch 1, bei dem der Anteil der Komponente b) 5 bis 10 Gew.-% beträgt.

4. Versatz nach Anspruch 1, bei dem die Komponente c) aus SrO, TiO₂, ZrO₂, SiO₂, CaO-MgO Schmelzmaterial, SrO-CaO Schmelzmaterial, SrO-ZrO₂ Schmelzmaterial, nicht oxidischer Strontiumverbindung oder Mischungen daraus besteht.

5. Versatz nach Anspruch 4, bei dem die nicht oxidische Strontiumverbindung aus Sr-Carbonat, Sr-Sulfat, Sr-Hydroxid, Sr-Nitrat, Sr-Chlorid, Sr-Borid oder Mischungen daraus besteht.

6. Versatz nach Anspruch 1, bei dem der MgO-Gehalt der Komponente a) mindestens 97 Gew.-% beträgt.

7. Versatz nach Anspruch 1, bei dem die Komponente b) in einer Kornfraktion < 200 µm vorliegt.

8. Versatz nach Anspruch 1, bei dem die Komponente b) eine Reinheit von mindestens 96 Gew.-% CaO aufweist.

9. Versatz nach Anspruch 1, bei dem die Komponente c) eine Korngröße < 1 mm aufweist.

10. Versatz nach Anspruch 1, mit einem Gehalt von 2 bis 20 Gew.-% Kohlenstoff.

11. Ungebrannter keramischer Formkörper aus einem Versatz nach einem der Ansprüche 1 bis 10 und einem Bindemittel.

12. Gebrannter feuerfester keramischer Formkörper aus einem Versatz nach einem der Ansprüche 1 bis 10 und einem Bindemittel.

13. Verwendung eines keramischen Formkörpers nach Anspruch 11 oder 12 zur Auskleidung eines metallurgischen Schmelzgefäßes, bei dem der Gehalt der Komponenten MgO und CaO so eingestellt ist, daß das CaO mit einem Schlackeninfiltrat hochschmelzende Phasen wie C₂S in einer Menge bildet, die offene Poren des Formkörpers auf seiner Feuerseite oberflächennah verfüllt.

## Claims

1. Batch for producing a refractory ceramic shaped article, comprising the following individual components:
a) 68 to 97 wt.-% fused magnesia, sintered magnesia or mixtures thereof with > 93 wt.-% MgO and a particle size < 8mm,
b) 3 to 20 wt.-% CaO in a grain fraction < 1mm,
c) 0 to 25 wt.-% of at least one further refractory component or a component being refractory after firing, in particle size < 3mm.

2. Batch according to claim 1, in which the particle size of component a) being < 5mm.

3. Batch according to claim 1, in which the proportion of component b) being 5 to 10 wt.-%.

4. Batch according to claim 1, in which component c) comprises SrO, TiO₂, ZrO₂, SiO₂, CaO-MgO fused material, SrO-CaO fused material, SrO-ZrO₂ fused material, none-oxidic Sr compounds or mixtures thereof.

5. Batch according to claim 4, in which the none-oxidic Sr compound comprises Sr-carbonate, Sr-sulfate, Sr-hydroxide, Sr-nitrate, Sr-chloride, Sr-boride or mixtures thereof.

6. Batch according to claim 1, in which the MgO content of component a) being at least 97 wt.-%.

7. Batch according to claim 1, in which component b) is present in a grain fraction < 200 µm.

8. Batch according to claim 1, in which component b) has purity of at least 96 wt.-% CaO.

9. Batch according to claim 1, in which component c) has a particle size < 1mm.

10. Batch according to claim 1 comprising 2 to 20 wt.-% carbon.

11. Unfired ceramic shaped article made of a batch according to one of claims 1 to 10 and a binder.

12. Fired refractory ceramic shaped article made of a batch according to claim 1 to 10 and a binder.

13. Use of a ceramic shaped article according to claim 11 or 12 for lining a metallurgical vessel, according to which the amount of components MgO and CaO is adjusted in such a way that CaO provides, together with a slag infiltrate, high melting phases like C₂S in such an amount that the open pores of the shaped article on its surface facing the hot side, are filled in the surface area.

## Revendications

1. Mélange pour fabriquer un corps moulé en céramique réfractaire constitué des composants autonomes suivants :
a) 68 à 97 % en poids de magnésie moulé en fusion , de magnésie frittée ou de mélanges de ces dernières avec une teneur de MgO > 93 % en poids et une granulométrie < 8 mm,
b) 3 à 20 % en poids de CaO dans une granulométrie < 1 mm,
c) 0 à 25 % en poids d'au moins un autre composant réfractaire ou réfractaire après une cuisson d'une granulométrie < 3 mm.

2. Mélange selon la revendication 1 pour lequel la granulométrie du composant a) est < 5 mm.

3. Mélange selon la revendication 1, pour lequel la teneur en composant b) représente 5 à 10 % en poids.

4. Mélange selon la revendication 1, pour lequel le composant c) est constitué de matière SrO, TiO₂, ZrO₂, SiO₂, CaO-MgO moulé en fusion, de matière SrO-CaO moulé en fusion, de matière SrO-ZrO₂ moulé en fusion, de combinaison non oxidée de strontium ou de mélanges de ceux-ci.

5. Mélange selon la revendication 4, pour lequel la combinaison non oxydée de strontium est constituée de carbonate Sr, de sulfate Sr, d'hydroxyde Sr, de nitrate Sr, de chlorure Sr, de borure Sr ou de mélanges de ceux-ci.

6. Mélange selon la revendication 1, pour lequel la teneur en MgO du composant a) représente au moins 97 % en poids.

7. Mélange selon la revendication 1, pour lequel le composant b) est présent dans une granulométrie < 200 µm.

8. Mélange selon la revendication 1, pour lequel le composant b) présente une pureté d'au moins 96 % en poids de CaO.

9. Mélange selon la revendication 1, pour lequel le composant c) présente une granulométrie < 1 mm.

10. Mélange selon la revendication 1, avec une teneur de 2 à 20 % en poids de carbone.

11. Corps moulé en céramique non fritté constitué d'un mélange selon l'une des revendications 1 à 10 et d'un liant.

12. Corps moulé en céramique réfractaire fritté constitué d'un mélange selon l'une des revendications 1 à 10 et d'un liant.

13. Utilisation d'un corps moulé en céramique selon la revendication 11 ou 12 pour parement d'un récipient de fusion métallurgique pour lequel la teneur des composants MgO et CaO est paramétrée de telle sorte que le CaO forme avec une infiltration de laitier, des phases de haute fusion, du C₂S par exemple, à une quantité qui remplit les pores ouvertes du corps moulé sur son côté exposé au feu, à proximité de la surface.
